# FASCICULE DE BREVET EUROPEEN

(11) **EP 0 422 550 B1**
(45) Date de publication et mention de la délivrance du brevet: **04.01.1995**
(21) Numéro de dépôt: 90119245.0
(22) Date de dépôt: 08.10.1990
(51) Int. Cl.: H04L 12/56

(54) **Dispositif d'évaluation du débit de circuits virtuels empruntant une voie de transmission à multiplexage temporel asynchrone**
Vorrichtung zur Auswertung der Rate von virtuellen Verbindungen aus einer asynchronen Zeit-Multiplexlinie
Device for evaluating the rate of virtual circuits in an asynchronous time multiplex transmission path

(30) Priorité: 12.10.1989 FR 8913342
(43) Date de publication de la demande: 17.04.1991
(73) Titulaire: ALCATEL CIT, 75008 Paris (FR)
(72) Inventeur: Le Bihan, Denis, F-22300 Lanmerin (FR)
(74) Mandataire: Weinmiller, Jürgen

(56) Documents cités:
- EP-A- 0 169 017
- US-A- 4 475 192
- IEEE JOURNAL OF SELECTED AREAS IN COMMUNICATIONS, vol. SAC-5, no. 8, octobre1987, pages 1315-1326, IEEE, New York, US; M.G.H. KATEVENIS: "Fast switching and fair control of congested flow in broadband network"

## Description

La présente invention concerne un dispositif d'évaluation du débit de circuits virtuels empruntant une voie de transmission à multiplexage temporel asynchrone.

Une voie de transmission à multiplexage temporel asynchrone est une voie de transmission acheminant des messages de données dans des structures de données numériques appelées cellules. Chaque cellule comprend un en-tête constitué, par exemple, de quatre caractères à huit bits et un corps de message constitué d'une nombre défini de caractères, 32 par exemple. Sur la voie de transmission, de telles cellules se suivent sans interruption. S'il n'y a pas de message à transmettre, la voie de transmission achemine une cellule "vide", c'est-à-dire une cellule de même format qu'une cellule de message et comportant une information conventionnelle aisément reconnaissable. Des dispositions sont prises pour maintenir une proportion suffisante de telles cellules vides dans le flot des cellules de message ; elles servent en effet, notamment, à la synchronisation de l'extrémité de réception sur le format des cellules.

L'en-tête de chaque cellule de message contient sur deux caractères par exemple, une information définissant, à l'intention de l'extrémité de réception, la direction dans laquelle le corps de message devra être retransmis. Les deux autres caractères de l'entête contiennent des informations de service et, notamment, une information de contrôle de code et de détection d'erreur relative aux deux caractères de destination précédents. La même information se retrouve dans les en-têtes de cellules irrégulièrement espacées, qui ont la même destination. Elle identifie ainsi une sorte de circuit virtuel occupant une partie de la capacité de transmission de la voie de transmission. Plus généralement, ce circuit virtuel va occuper la voie de transmission en lui apportant un certain débit, mesuré par exemple en cellules par unité de temps, et ce débit est fluctuant. L'invention a plus précisément pour objet d'évaluer ce débit, de manière aussi précise que possible.

La voie de transmission supporte à tout instant plusieurs circuits virtuels dont les cellules s'intercalent de manière irrégulière dans ce qui est couramment appelé un multiplexage temporel asynchrone. Les débits - fluctuants - des différents circuits virtuels sont différents. La somme de ces débits est limitée par le débit maximal de la voie de transmission. Elle fluctue aussi. Cela laisse la place à la transmission de cellules vides.

Par ailleurs, le nombre de circuits virtuels qui peuvent être séparément identifiés dépend du nombre de bits dévolus à cette information dans l'en-tête des cellules. Le nombre maximal de circuits virtuels est quant à lui déterminé, entre autres, par le nombre de circuits virtuels auquel on aboutit en divisant le débit maximal de la voie de transmission par le débit minimal d'une source de données pouvant emprunter un circuit virtuel. Il est très élevé et atteint par exemple 64 K.

Mais on destine la transmission à multiplexage temporel asynchrone aux plus larges domaines d'application et les débits à prévoir pour les sources pouvant emprunter un circuit virtuel s'étagent dans une vaste gamme de débits (par exemple de quelques kilobits à quelques centaines de mégabits par seconde). Le nombre de circuits virtuels actifs sera donc en général bien moindre que leur nombre maximal.

La définition qui précède de la transmission par multiplexage temporel asynchrone ne doit toutefois pas être limitée aux cas où les cellules sont toutes de la même longueur. L'emploi de cellules de longueurs différentes, toutes multiples d'une longueur de base est concevable et les adaptations qui en découlent, pour ce qui concerne la présente invention, sont à la portée de l'homme de métier.

Une voie de transmission à multiplexage temporel asynchrone est donc faite pour acheminer les données fournies par des sources aux débits très variés et fluctuant. En aval, des équipements de commutation et de transmission acheminent les messages contenus dans les cellules vers leurs destinations. Il convient donc, au niveau de la voie de transmission considérée, pour ne pas risquer d'engorgement en aval, de faire en sorte qu'aucune source, par fraude ou par suite d'une défaillance, n'apporte, même temporairement, un débit supérieur à celui qui lui est globalement attribué.

Une solution connue à ce problème est la répression. L'acheminement par la voie de transmission de toute cellule considérée comme excédentaire par rapport au débit globalement attribué au circuit virtuel est empêché, ou tout au moins la cellule excédentaire est marquée en tant que telle, pour qu'elle soit rejetée plus loin, en cas d'engorgement.

L'application d'une telle solution suppose une mesure du débit constaté sur le circuit virtuel, une telle mesure débouchant éventuellement sur le marquage d'une cellule excédentaire.

On connaît par le document FR-A-2 616 024 un dispositif de mesure de débit qui comprend un compteur incrémenté d'un pas à la réception d'une cellule du circuit virtuel auquel il est affecté et décrémenté d'un pas à chaque impulsion d'une horloge. Si le débit du circuit virtuel est faible, ce compteur recule plus souvent qu'il n'avance et finit par se bloquer dans une position minimale ; par contre, si la fréquence des cellules du circuit virtuel est durablement supérieure à celle des impulsions de l'horloge, le compteur finit par se bloquer dans une position maximale et peut alors causer le marquage de la cellule comme excédentaire indiqué plus haut.

Un tel système a pour inconvénient de ne pouvoir être appliqué qu'à un nombre limité de circuits virtuels, en raison du temps nécessaire pour décrémenter les compteurs. Il n'est pas appliquable dans le cas où les circuits virtuels sont très nombreux comme envisagé précédemment.

La présente invention propose donc un dispositif d'évaluation du débit de circuits virtuels empruntant une voie de transmission à multiplexage temporel asynchrone, dans lequel les cellules entrantes d'une voie à multiplexage temporel asynchrone d'entrée , comportant une en-tête contenant une information de destination pouvant être traitée comme une identité de circuit virtuel, sont comptées par un compteur affecté à chaque circuit virtuel, qui est incrémenté à chaque cellule entrante du circuit virtuel et qui est périodiquement décrémenté, tant qu'il n'est pas dans une position de repos, dispositif ne souffrant pas de la limitation mentionnée.

Selon une caractéristique essentielle de l'invention, ce dispositif comprend des moyens d'horloge définissant des temps cellule successivement numérotés, correspondant à des intervalles de temps successifs durant lesquels sont reçues des cellules entrantes sur la voie de transmission à multiplexage temporel asynchrone d'entrée, des moyens de file d'attente définissant une file d'attente de temps cellule propre à chacun desdits temps cellule, un circuit virtuel pouvant être affecté à un temps cellule par l'inscription de son identité dans la file d'attente de temps cellule correspondante, des moyens de commande utilisant le contenu desdites files d'attente de temps cellule et, à chaque temps cellule, pouvant identifier un circuit virtuel à traiter et décrémenter le compteur appartenant à ce circuit virtuel, ces moyens de commande comprenant par ailleurs des dispositions telles que tout circuit virtuel dont le compteur n'est pas en position de repos soit affecté à un des temps cellules afin que le compteur soit décrémenté du fait de la survenance de ce temps cellule.

Selon une autre caractéristique de l'invention, lesdits moyens de commande sont tels qu'à chaque temps cellule, le contenu de la file d'attente de temps cellule associée à ce temps cellule est transféré dans une file d'attente de traitement, chaque identité de circuit virtuel de la file d'attente de traitement étant utilisée à son tour pour décrémenter le compteur du circuit virtuel qu'elle désigne.

Selon une autre caractéristique de l'invention, lesdits moyens de commande sont tels qu'après la décrémentation du compteur d'un circuit virtuel, et si ce compteur n'est pas revenu en position de repos, l'identité de ce circuit virtuel est inscrite dans une file d'attente de temps cellule qui est sélectionnée en prenant en compte une indication de vitesse attachée au circuit virtuel considéré.

Selon une autre caractéristique de l'invention, lesdits moyens de commande sont tels qu'après la décrémentation du compteur d'un circuit virtuel, et si ce compteur n'est pas revenu en position de repos, l'identité de ce circuit virtuel est inscrite dans une file d'attente de temps cellule qui est sélectionnée en prenant en compte une indication de vitesse attachée au circuit virtuel considéré, et une donnée dépendant du débit observé de ce circuit virtuel.

Selon une autre caractéristique de l'invention, lesdits moyens de commande sont tels qu'à la réception d'une cellule entrante et si le compteur du circuit virtuel est dans sa position de repos, l'identité de ce circuit virtuel est inscrite dans une file d'attente de temps cellule qui est sélectionnée en prenant en compte une indication de vitesse attachée au circuit virtuel considéré.

Selon une autre caractéristique de l'invention, lesdits moyens de commande sont tels qu'à la réception d'une cellule entrante et si le compteur du circuit virtuel est dans sa position de repos, l'identité de ce temps cellule est inscrite dans une file d'attente de temps cellule qui est sélectionnée en prenant en compte une indication de vitesse attachée au circuit virtuel considéré, et une donnée dépendant du débit observé de ce circuit virtuel.

Selon une autre caractéristique de l'invention, ladite donnée dépendant du débit est la position occupée par le compteur du circuit virtuel considéré.

Selon une autre caractéristique de l'invention, il est prévu une indication de comptage propre à chaque circuit virtuel et lesdits moyens de commande sont tels que cette indication de comptage est incrémentée lors de la décrémentation dudit compteur d'un circuit virtuel, lorsque ce compteur est dans une plage de positions déterminée, et décrémentée, si le compteur est dans une position inférieure à cette plage de positions.

Selon une autre caractéristique de l'invention, ladite indication de comptage possède une valeur maximale, atteinte dans le cas où ladite plage est atteinte de façon majoritaire, lesdits moyens de commande comprenant en outre des dispositions qui causent alors la mise en oeuvre d'une indication de vitesse correspondant à une réduction de la vitesse de décrémentation dudit compteur.

Selon une autre caractéristique de l'invention, lesdits moyens de commande sont tels que, lors de la décrémentation d'un compteur de circuit virtuel, et si ce compteur n'est pas ainsi revenu dans sa position de repos, l'identité du circuit virtuel auquel il appartient est inscrite dans une file d'attente de temps cellule qui est sélectionnée à partir du temps cellule en cours.

Selon une autre caractéristique de l'invention, lesdits moyens de commande sont tels que, lors de la décrémentation d'un compteur de circuit virtuel, et si ce compteur n'est pas ainsi revenu dans sa position de repos, l'identité du circuit virtuel auquel il appartient est inscrite dans une file d'attente de temps cellule qui est sélectionnée à partir du temps cellule auquel le circuit virtuel dont il s'agit avait précédemment été affecté, dont l'identité avait été enregistrée à cet effet.

Selon une autre caractéristique de l'invention, des moyens sont prévus pour déceler que le compteur d'un circuit virtuel a atteint une position maximale, pour l'empêcher de la dépasser, ainsi que pour provoquer l'envoi d'un signal indiquant que le débit du circuit virtuel est excessif.

Les différents objets et caractéristiques de l'invention apparaîtront de façon plus détaillée dans la description qui va suivre, donnée à titre d'exemple non limitatif, en se reportant à la figure annexée qui représente un mode de réalisation du dispositif d'évaluation de débit de la présente invention.

Une voie multiplex temporelle asynchrone d'entrée mtr est couplée à une logique de réception LR. Cette voie multiplex est par exemple du type évoqué dans le préambule. Elle fournit des cellules entrantes successives comportant une en-tête contenant un numéro de circuit virtuel.

Une voie multiplex temporelle asynchrone de sortie mte est couplée à la logique de réception LR. Cette voie est du même type que la voie d'entrée mtr. La logique de réception LR lui fournit des cellules sortantes qui sont les cellules entrantes successives éventuellement affectées d'un retard et modifiées comme on le verra ultérieurement.

Le dispositif de l'invention comprend des moyens que l'on va maintenant décrire, pour évaluer l'espacement entre les cellules de chacun des circuits virtuels, c'est-à-dire le débit de chacun des circuit virtuels supportés par les voies multiplex mtr, mte.

Ces moyens comprennent essentiellement une horloge HG, un compteur de cellules CTC, des zones de mémoire FAVE, FAVR, FCVC, FCVN, FCVR, FCVV, ainsi que des moyens de commande MC.

L'horloge HG est une base de temps qui est synchronisée sur les signaux reçus de la voie multiplex entrante mtr, par des moyens non représentés, mais bien connus dans la technique, et qui fournit entre autres un signal CV identifiant le début d'un intervalle de temps répétitif dit temps cellule dont la durée est celle de la réception, ou de l'émission, d'une cellule.

Le compteur de temps cellule CTC est un compteur cyclique à N positions (N entier et de préférence égal à une puissance de 2) qui fournit, à chaque temps cellule, un numéro de temps cellule ntc prenant successivement les différentes valeurs de 0 à N-1.

Par ailleurs, la logique de réception LR fournit, sur une liaison LLR, l'identité NCV du circuit virtuel auquel appartient chaque cellule reçue .

Les zones de mémoire mentionnées sont plus précisément :
- une table de files d'attente de temps cellule FAVE comprenant N emplacements, un par numéro de temps cellule; chacun de ces emplacements sert à la constitution d'une file d'attente de temps cellule et contient à cet effet l'identité FAF d'un premier circuit virtuel demandant un traitement, l'identité FAL d'un dernier circuit virtuel demandant un traitement, ainsi qu'un bit FAV servant à marquer une file d'attente vide,
- une table de traitement FAVR comprenant l'identité FVF d'un premier circuit virtuel demandant un traitement et l'identité FVL d'un dernier circuit virtuel demandant un traitement.
- une table de compteurs de circuits virtuels FCVR comprenant un emplacement de mémoire par circuit virtuel, chacun d'eux contenant un compte FFB du nombre de cellules reçues sur ce circuit virtuel et demandant une évaluation (dans ce qui suit, sans que cela nuise à la clarté, on désignera souvent ces emplacements de mémoire comme des compteurs FFB),
- une table de vitesses FCVV comprenant un emplacement de mémoire par circuit virtuel, chacun d'eux contenant au moins deux indications de vitesse indv1 et indv2 à utiliser en relation avec ce circuit virtuel comme on le verra par la suite,
- une table de chaînage FCVN comprenant un emplacement de mémoire par circuit virtuel, chacun d'eux contenant l'identité FFN d'un autre circuit virtuel avec lequel le circuit virtuel considéré est chaîné.

Lorsqu'une cellule est reçue sur la voie entrante mtr, l'horloge HG fournit un signal CV, la logique de réception LR fournit, sur la liaison LLR, l'identité NCV du circuit virtuel auquel appartient la cellule, dérivée de l'en-tête de la cellule, tandis que le compteur CTC fournit un numéro d'intervalle de temps cellule ntc. En réponse, le dispositif MC lit la table FCVR, selon l'identité de circuit virtuel NCV, et obtient le nombre FFV de cellules du circuit virtuel déjà reçues et n'ayant pas encore donné lieu à traitement. Ce nombre est incrémenté, avant d'être réinscrit dans la même emplacement.

De plus, le nombre FFB est testé, avant d'être incrémenté, par exemple. S'il est différent de zéro, aucune action spécifique n'est à ce moment nécessaire. Le nombre de cellules reçues et devant donner lieu au traitement d'évaluation augmente simplement d'une unité.

Par contre, si le nombre FFB est nul, ou, en d'autres termes, si le compteur FFB est dans une position de repos, le circuit virtuel auquel appartient la cellule reçue doit être affecté à un temps cellule, en vue d'un traitement d'évaluation. Pour cela, le dispositif MC inscrit l'identité de circuit virtuel NCV dans la table de files d'attente FAVE. Plus précisément, le dispositif MC adresse la table FAVE avec une indication d'adresse NTC qui est dérivée du numéro de temps cellule courant, fourni par le compteur CTC, par exemple par addition d'une valeur constante. A l'emplacement désigné par cette indication d'adresse NTC, dans la table FAVE, le dispositif MC lit les identités FAF du premier circuit virtuel déjà affecté à ce temps cellule, et celle , FAL, du dernier circuit virtuel affecté à ce temps cellule, ainsi que le bit FAV. Le dispositif MC enregistre, comme nouvelle identité FAL, le numéro NCV du circuit virtuel considéré. De plus, l'identité FAL est utilisée pour adresser la table FCVN et y inscrire l'identité NCV comme indication de chaînage FFN. Toutefois, si le bit FAV indique que la file d'attente était vide, cette dernière opération est omise et l'identité NCV est inscrite aussi comme identité FAF, dans la table FAVE, à l'adresse NTC, tandis que le bit FAV y est changé d'état pour indiquer maintenant que la file d'attente n'est pas vide.

Ainsi, le numéro du circuit virtuel considéré est chaîné dans une file d'attente associée à un temps cellule à venir, dont le début est l'identité FAF et la fin l'identité FAL, le chaînage étant matérialisé par l'inscription de numéros de circuits virtuels dans la table FCVN ; ce procédé est classique.

Selon une variante, au lieu de chaîner l'identité du circuit virtuel dans un temps cellule à venir sélectionné par addition d'une valeur constante au numéro de temps cellule courant ntc, la table FCVV est également lue et fournit, provenant d'un emplacement appartenant au circuit virtuel considéré, lu en réponse en réponse au numéro de circuit virtuel NCV, une indication de vitesse indv1, laquelle est ajoutée au numéro de temps cellule courant ntc. La somme ntc+indv1 fournit alors l'adresse NTC. L'indication de vitesse indv1, qui peut être en fait une valeur d'espacement entre cellules à prendre en compte lorsque le débit du circuit virtuel est faible, sert à adopter une vitesse de décrémentation faible pour le compteur FFB.

Par ailleurs, toujours dans le cadre du test de la position du compteur FFB, on prévoira, selon l'invention, la détection de la position extrême atteinte par le compteur FFB en cas de persistance d'un débit excessif. Les moyens de commande MC, détectant une telle position extrême, sont aménagés pour fournir un signal exc, lequel est transmis à la logique de réception LR. Il peut servir à modifier la prochaine cellule de ce circuit virtuel reçue de la liaison multiplex entrante, avant qu'elle soit transmise sur la liaison sortante, afin de la faire apparaître comme excédentaire par rapport au débit permis au circuit virtuel considéré.

Toutes les cellules reçues donnent lieu aux opérations que l'on vient de décrire. Une première cellule d'un circuit virtuel, qui se présente alors que le compteur FFB de ce circuit virtuel est en position de repos, est chaînée comme on vient de la voir. Des cellules suivantes, qui se présentent alors que le compteur n'est plus au repos ne sont pas chaînées de cette façon ; elles le sont plus tard et d'une manière différente, comme on va le voir maintenant, dans la description du processus d'évaluation.

A chaque temps cellule, les moyens de commande MC procèdent à un traitement d'évaluation dont un élément essentiel consiste à décrémenter le compteur FFB d'un circuit virtuel. A partir du numéro ntc fourni par le compteur CTC, le dispositif MC lit la table FAVR. L'indication FVF désigne un circuit virtuel dont le compteur FFB n'est pas en position de repos, c'est-à-dire ayant fourni une cellule pour laquelle le traitement d'évaluation n'a encore été effectué. Cette indication sert à la lecture de la table FCVR et le compteur FFB est décrémenté ; sa position peut alors devenir égale à zéro et il n'y a pas lieu de chaîner à nouveau le circuit virtuel dans la file d'attente d'un temps cellule.

Par ailleurs, la même indication FVF sert à adresser la table de chaînage FCVN. Cette table fournit, à l'adresse indiquée, l'identité FFN d'un circuit virtuel suivant, dans la file d'attente d'émission, laquelle est alors inscrite dans la table FAVR, comme nouvelle indication FVF, en vue du traitement du circuit virtuel suivant. La combinaison des tables FAVR et FCVN fournit ainsi la liste des circuits virtuels devant faire l'objet d'un traitement d'évaluation. S'il advient qu'elle soit vide, aucun traitement n'est effectué.

D'autre part, le dispositif MC adresse la table de files d'attente FAVE, à partir du numéro ntc, pour y lire l'identité FAF qui constitue le début de la file d'attente des circuits virtuels associés au temps cellule considéré et l'identité FAL qui en est la fin, à moins que le bit FAV n'indique que la file d'attente est vide. De plus, l'identité FVL tirée de la table FAVR est utilisée pour adresser la table FCVN. A l'adresse en question de la table FCVN est inscrite l'identité FAF, tandis que l'identité FAL est inscrite dans la table FAVR, comme nouvelle indication FVL, et que le bit FAV est commuté, dans l'emplacement que l'on vient de lire de la table FAVE, pour indiquer que la file d'attente est vide. Cela réalise le chaînage de la totalité de la file d'attente associée au temps cellule considéré, dans la file d'attente des circuits virtuels devant faire l'objet d'un traitement d'évaluation. Il est à noter que l'on peut également procéder à un tel chaînage avant d'exploiter la file d'attente de traitement.

Bien entendu, si le bit FAV initialement lu dans la table FAVE indique que la file d'attente du temps cellule considéré est vide, les opérations de chaînage dans la file d'attente de traitement que l'on vient de décrire sont omises.

Il reste enfin, puisque l'on vient d'effectuer un traitement d'évaluation au profit d'un circuit virtuel, à initialiser un traitement d'évaluation suivant éventuel de ce même circuit virtuel. Pour cela, il convient, partant de l'identité de ce circuit virtuel FVF, fournie par la table FAVR, d'interroger la table de compteurs FCVR et la table de vitesses FCVV. La première fournit une indication sur le nombre de cellules en attente d'évaluation du circuit virtuel. Plus ce nombre est élevé, plus la vitesse de décrémentation du compteur FFB du circuit virtuel doit être élevée, c'est-à-dire plus l'intervalle entre opérations de décrémentation doit être réduit. A titre d'exemple, la table FCVV fournit deux indications indv1 et indv2, chacune associée à un niveau de débit du circuit virtuel. Ces indications peuvent être le nombre de temps cellules qui doivent s'écouler avant que le compteur FFB du circuit virtuel soit à nouveau décrémenté. Si le débit est faible, alors c'est l'indication indv1 qui s'applique. Le dispositif MC effectue la somme ntc+indv1 et s'en sert pour adresser la table FAVE. L'identité FAL du dernier circuit virtuel associé à ce temps cellule est utilisée pour adresser la table FCVN et y inscrire, à cette adresse, l'identité du circuit virtuel considéré, FAF, lue dans la table FAVE à l'adresse ntc. Cette dernière identité est alors inscrite dans la table FAVE, à l'adresse ntc+indv1, comme nouvelle adresse FAL, tandis que le bit FAV, à la même adresse est commuté, si nécessaire, pour indiquer que la file d'attente n'est pas vide. Ces opérations réalisent le chaînage du circuit virtuel au temps cellule ntc+indv1. Bien entendu, si le débit du circuit virtuel est plus élevée, l'indication indv2 peut s'appliquer et causer le chaînage de ce circuit virtuel l'associant à un temps cellule ntc+indv2 plus proche, et ainsi de suite. En outre, les intervalles spécifiés par les indications indv1, indv2, etc., tiendront compte de la vitesse de transmission du circuit virtuel. On remarquera que cet intervalle est au plus égal à N, ce qui n'est pas gênant, même pour les circuits virtuels à débit faible.

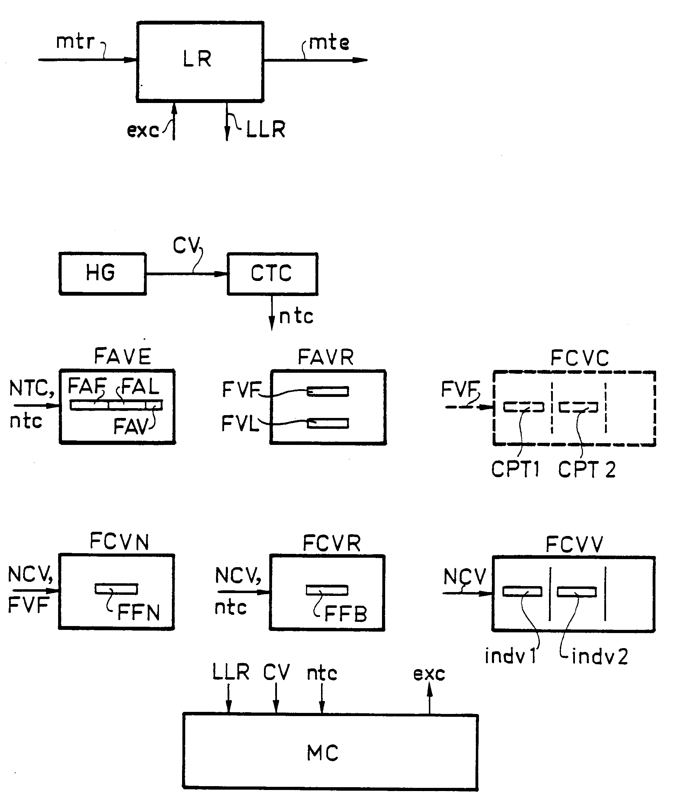

Une disposition additionnelle du dispositif de régulation de l'invention, tel qu'il vient d'être décrit, est représentée en pointillés à la figure 2. Il s'agit d'une table FCVC ayant un emplacement par circuit virtuel contenant au moins une indication de comptage telle que CPT1, CPT2... Cette mémoire est addressée au traitement d'une cellule, par l'indication FVF fournie par la file d'attente de traitement (table FAVR). L'indication de comptage CPT1 est décrémentée, ou incrémentée, en fonction du nombre de cellules reçues du circuit virtuel et non encore évaluées, indiquée par le compteur FFV de la table FCVR. Le compteur CPT1 est ainsi décrémenté (jusqu'à zéro seulement) si le nombre fourni par le compteur FFB est faible et se traduit, par exemple, par l'utilisation de l'indication d'espacement indv1. Il est incrémenté, si ce nombre est plus élevé. D'autres positions de comptage semblables peuvent être associées à des débits plus élevés. Chaque indication de comptage additionnelle aura une capacité réduite par rapport aux précédentes. Ces différentes indications de comptage évalueront ainsi chacune une moyenne de présence du débit du circuit entrant à un niveau donné, l'ensemble de ces indications de comptage définissant un gabarit débit-temps. Si le débit du circuit virtuel reste trop longtemps à un niveau donné, l'indication de comptage correspondant atteindra son maximum. Il est alors aisé de limiter autoritairement le temps durant lequel le débit pourra, en moyenne, rester à tout niveau donné en définissant en conséquence la capacité de comptage de l'indication de comptage correspondante et en prévoyant que, lorsque l'indication de comptage de ce niveau atteint son maximum, au lieu d'appliquer l'indication d'espacement qui s'applique normalement pour ce niveau, indv2 par exemple, on choisira à la place une indication d'espacement aboutissant à une vitesse de décrémentation plus faible, indv1 par exemple. Le résultat en sera une progression rapide du compteur FFB du circuit virtuel, si le débit e'entrée ne se réduit pas et, en conséquence, le refus ultérieur de cellules surnuméraires.

Pour résumer, chaque cellule entrante est comptée par incrémentation du compteur FFB du circuit virtuel auquel elle appartient. Un file d'attente de temps cellule est associée à chaque temps cellule. Une file d'attente d'évaluation est associée à l'ensemble de la liaison multiplex. Elle est alimentée par les files d'attente de temps cellule.

Une première cellule entrante d'un circuit virtuel donne d'abord lieu à inscription du circuit virtuel dans la file d'attente d'un temps cellule suivant celui dans lequel elle arrive. Lorsque ce temps cellule est atteint, la file d'attente de temps cellule correspondante est incorporée à la fin de la file d'attente d'évaluation. Lorsque vient son tour dans la file d'attente d'évaluation, le circuit virtuel fait l'objet d'un traitement d'évaluation consistant principalement à décrémenter le compteur FFB de ce circuit virtuel et à incrémenter ou décrémenter la ou les indications de comptage appropriées de ce circuit virtuel.

Si les débits des circuits virtuels sont faibles, chaque cellule entrante d'un circuit virtuel donne lieu à traitement d'évaluation avant que la cellule suivante ne se présente, de sorte que le compteur FFB du circuit virtuel reste en position de repos.

Un dispositif de gestion non représenté peut prendre connaissance de temps à autre de la position des compteurs de la table FCVR. Pour tout compteur en position de repos, il pourra conclure que le débit du circuit virtuel est inférieur au débit minimal associé au circuit virtuel sous la forme de l'indication de vitesse indv1.

Pour un circuit virtuel fournissant un débit supérieur, le compteur FFB quitte sa position de repos. Si aucune autre indication vitesse n'est utilisée, la position du compteur FFB est simplement la mesure de l'excès, en nombre de cellules, du débit du circuit virtuel par rapport à un débit défini par l'indication de vitesse indv1. La capacité du compteur caractérise l'étendue de la tolérance à cet égard. Lorsque celle-ci est outrepassée, une cellule entrante trouve le compteur FFB en position extrême. Cela cause la fourniture du signal exc en vue de caractériser cette dernière cellule comme excédentaire.

L'utilisation de plusieurs indications de vitesses, en fonction du débit observé du circuit virtuel, par exemple en fonction de la plage de positions atteinte par le compteur FFB de ce circuit virtuel, permet d'évaluer le dépassement non pas d'un seuil de débit, mais de plusieurs. Le nombre de positions restantes du compteur étant plus faible à chaque nouveau seuil de débit franchi, l'étendue du dépassement permis de ce seuil, en nombre de cellules est à chaque fois plus faible, ce qui revient à attribuer au circuit virtuel des couples débit-dépassement exprimant le fait qu'il est permis au circuit virtuel de fournir des débits croissants, chacun d'eux avec une tolérance subsistante plus réduite que les précédents. La lecture du compteur par le dispositif de gestion est toujours une évaluation du débit du circuit virtuel au-dessus du débit minimal mentionnée, mais elle demande une interprétation en fonction des indications de vitesses de ce circuit virtuel qui agissent sur l'évolution du compteur.

L'adjonction des indications de comptage CPT1, CPT2...permet de faire entrer, dans l'évaluation de débit, la persistance du débit du circuit virtuel à un niveau donné.

Par ailleurs, on va maintenant examiner une variante dans l'évaluation du débit, par rapport à ce qui vient d'être décrit. On rappelle que, dès qu'une cellule se présente avant que la précédente ait donné lieu au traitement d'évaluation, cette deuxième cellule est simplement comptée. Lorsque le traitement demandé par la première cellule est accompli, la présence d'une deuxième cellule dans le compte tenu par le compteur FFB donne lieu à inscription du circuit virtuel dans une file d'attente d'un temps cellule à venir déterminé à partir du temps cellule en cours et d'une indication de vitesse propre au circuit virtuel. La deuxième cellule donnera ainsi lieu à un traitement d'évaluation avec un espacement minimal déterminé par rapport au premier. Il en sera éventuellement de même de cellules suivantes, jusqu'à ce que l'on revienne au traitement initialement résumé. On remarquera que l'on peut de façon simple, donner aux opérations de traitement des cellules reçues un espacement moyen défini et non pas un espacement minimal. Il suffit de déterminer le temps cellule auquel un circuit virtuel est associé pour le traitement d'une cellule suivante, au moment du traitement de cellule courant, non pas par une expression telle que ntc+indv1 ou ntc+indv2, comme indiqué plus haut, dans laquelle ntc désigne le temps cellule courant, mais par une expression telle que NTC(i+1) = NTCi+indv1 ou NTCi+indv2, dans laquelle NTCi est le temps cellule auquel le circuit virtuel avait été précédemment affecté. Pour cela, il suffit de conserver l'information NTCi dans une table additionnelle semblable à la table FCVF et de la lire au moment de calculer NTC(i+1). Ainsi, les cellules consécutives d'un même circuit virtuel donneraient lieu à affectation à des temps cellule régulièrement espacés de indv1 ou indv2 et seraient donc traitées avec un espacement réel basé en moyenne sur un tel espacement régulier et affecté seulement par les inégalités des files d'attente des temps cellule. Bien entendu, l'expression de NTC(i+1) indiquée plus haut n'est applicable que tant qu'elle fournit une valeur désignant un temps cellule postérieur au temps cellule courant ntc. Pour cette raison, on peut prévoir des moyens de correction de la valeur NTC(i+1) tels qu'il en soit ainsi dans tous les cas.

La logique de réception LR, et le dispositif de commande MC sont essentiellement des dispositifs de traitement de données à caractère logique. Il n'est pas nécessaire d'en donner une description détaillée. Dans l'état actuel de la technique, leur réalisation ne pose aucune difficulté au spécialiste ; elle sera basée sur l'emploi de processeurs programmés ayant des performances adaptées aux durées disponibles pour accomplir les opérations énumérées, compte tenu du débit des liaisons multiplex. Selon les besoins, en termes de performances, un nombre plus ou moins grand de processeurs se partageant les opérations décrites peuvent être prévus. Par ailleurs, on peut concevoir un tel dispositif oeuvrant au profit de plusieurs voies entrantes et de plusieurs voies sortantes. On peut même envisager de l'associer ou de l'incorporer à un commutateur de voies à multiplexage temporel asynchrone.

De même, on n'à pas mentionné des opérations initialisation dont la nécessité à un caractère d'évidence et dont la réalisation appartient à la technique classique en ce domaine.

D'une manière générale, il est bien évident que les descriptions qui précèdent n'ont été données qu'à titre d'exemple non limitatif et que de nombreuses variantes peuvent être imaginées, sans sortir pour autant du cadre de l'invention.

## Revendications

1. Dispositif d'évaluation du débit de circuits virtuels empruntant une voie de transmission à multiplexage temporel asynchrone dans lequel les cellules entrantes d'une voie à multiplexage temporel asynchrone d'entrée (mtr), comportant une en-tête contenant une information de destination pouvant être traitée comme une identité de circuit virtuel, sont comptées par un compteur (FFB) affecté à chaque circuit virtuel, qui est incrémenté à chaque cellule entrante du circuit virtuel et qui est périodiquement décrémenté, tant qu'il n'est pas dans une position de repos, **caractérisé** en ce qu'il comprend des moyens d'horloge (HG, CV, CTC) définissant des temps cellule successivement numérotés (ntc), correspondant à des intervalles de temps successifs durant lesquels sont reçues des cellules entrantes sur la voie de transmission à multiplexage temporel asynchrone d'entrée, des moyens de file d'attente (FAVE, FCVN) définissant une file d'attente de temps cellule (FAF, FAL, FAV) propre à chacun desdits temps cellule, un circuit virtuel pouvant être affecté à un temps cellule par l'inscription de son identité dans la file d'attente de temps cellule correspondante, des moyens de commande (MC) utilisant le contenu desdites files d'attente de temps cellule (FAF, FAL, FAV) et, à chaque temps cellule, pouvant identifier un circuit virtuel à traiter et décrémenter le compteur (FFB) appartenant à ce circuit virtuel, ces moyens de commande comprenant par ailleurs des dispositions telles que tout circuit virtuel dont le compteur (FFB) n'est pas en position de repos soit affecté (FAVE) à un des temps cellules, afin que le compteur (FFB) soit décrémenté du fait de la survenance de ce temps cellule.

2. Dispositif d'évaluation du débit de circuits virtuels conforme à la revendication 1, caractérisé en ce que lesdits moyens de commande (MC) sont tels qu'à chaque temps cellule, le contenu de la file d'attente de temps cellule associée à ce temps cellule est transféré dans une file d'attente de traitement (FAVR, FCVN), chaque identité de circuit virtuel (FVF, FVL, FFN) de la file d'attente de traitement étant utilisée à son tour pour décrémenter le compteur (FFB) du circuit virtuel qu'elle désigne.

3. Dispositif d'évaluation du débit de circuits virtuels conforme à la revendication 2, caractérisé en ce que lesdits moyens de commande (MC) sont tels qu'après la décrémentation du compteur (FFB) d'un circuit virtuel, et si ce compteur n'est pas revenu en position de repos, l'identité de ce circuit virtuel est inscrite dans une file d'attente de temps cellule (FAVE, FCVN) qui est sélectionnée en prenant en compte une indication de vitesse (FCVV, indv1) attachée au circuit virtuel considéré.

4. Dispositif d'évaluation du débit de circuits virtuels conforme à la revendication 3, caractérisé en ce que lesdits moyens de commande (MC) sont tels qu'après la décrémentation du compteur (FFB) d'un circuit virtuel, et si ce compteur n'est pas revenu en position de repos, l'identité de ce circuit virtuel est inscrite dans une file d'attente de temps cellule (FAVE, FCVN) qui est sélectionnée en prenant en compte une indication de vitesse (FCVV, indv1) attachée au circuit virtuel considéré et une donnée (FCVR, FFB) dépendant du débit observé de ce circuit virtuel.

5. Dispositif d'évaluation du débit de circuits virtuels conforme à la revendication 3 ou 4, caractérisé en ce que lesdits moyens de commande (MC) sont tels qu'à la réception d'une cellule entrante et si le compteur du circuit virtuel est dans sa position de repos, l'identité de ce circuit virtuel est inscrite dans une file d'attente de temps cellule (FAVE, FCVN) qui est sélectionnée en prenant en compte une indication de vitesse (FCVV, indv1) attachée au circuit virtuel considéré.

6. Dispositif d'évaluation du débit de circuits virtuels conforme à la revendication 3 ou 4, caractérisé en ce que lesdits moyens de commande (MC) sont tels qu'à la réception d'une cellule entrante et si le compteur du circuit virtuel est dans sa position de repos, l'identité de ce temps cellule est inscrite dans une file d'attente de temps cellule (FAVE, FCVN) qui est sélectionnée en prenant en compte une indication de vitesse (FCVV, indv1) attachée au circuit virtuel considéré et une donnée (FCVR, FFB) dépendant du débit observé de ce circuit virtuel.

7. Dispositif d'évaluation du débit de circuits virtuels conforme à la revendication 4 , 5 ou 6, caractérisé en ce que ladite donnée dépendant du débit est la position occupée par le compteur (FFB) du circuit virtuel considéré.

8. Dispositif d'évaluation du débit de circuits virtuels conforme à la la revendication 7, caractérisé en ce qu'il est prévu une indication de comptage (CPT1, CPT2) propre à chaque circuit virtuel et en ce que lesdits moyens de commande (MC) sont tels que cette indication de comptage est incrémentée lors de la décrémentation dudit compteur (FFB) d'un circuit virtuel, lorsque ce compteur est dans une plage de positions déterminée, et décrémentée, si le compteur est dans une position inférieure à cette plage de positions.

9. Dispositif d'évaluation du débit de circuits virtuels conforme à la revendication 8, caractérisé en ce que ladit indication de comptage (CPT1, CPT2) possède une valeur maximale, atteinte dans le cas où ladite plage est atteinte de façon majoritaire, lesdits moyens de commande comprenant en outre des dispositions qui causent alors la mise en oeuvre d'une indication de vitesse (indv1) correspondant à une réduction de la vitesse de décrémentation dudit compteur.

10. Dispositif d'évaluation du débit de circuits virtuels conforme à l'une quelconque des revendications 3 à 9, caractérisé en ce que lesdits moyens de commande (MC) sont tels que, lors de la décrémentation d'un compteur (FFB) de circuit virtuel, et si ce compteur n'est pas ainsi revenu dans sa position de repos, l'identité du circuit virtuel auquel il appartient est inscrite dans une file d'attente de temps cellule (FAVE, FCVN) qui est sélectionnée à partir du temps cellule en cours (ntc).

11. Dispositif d'évaluation du débit de circuits virtuels conforme à l'une quelconque des revendications 3 à 9, caractérisé en ce que lesdits moyens de commande (MC) sont tels que, lors de la décrémentation d'un compteur (FFB) de circuit virtuel, et si ce compteur n'est pas ainsi revenu dans sa position de repos, l'identité du circuit virtuel auquel il appartient est inscrite dans une file d'attente de temps cellule (FAVE, FCVN) qui est sélectionnée à partir du temps cellule auquel le circuit virtuel dont il s'agit avait précédemment été affecté, dont l'identité avait été enregistrée à cet effet.

12. Dispositif d'évaluation du débit de circuits virtuels conforme à la revendication 9, caractérisé en ce que des moyens sont prévus pour déceler que le compteur d'un circuit virtuel a atteint une position extrême, pour l'empêcher de la dépasser, ainsi que pour provoquer l'envoi d'un signal indiquant que le débit du circuit virtuel est excessif.

## Patentansprüche

1. Vorrichtung zur Auswertung des Durchsatzes von virtuellen Kreisen, die einen im asynchronen Zeitmultiplex betriebenen Übertragungskanal benutzen, bei dem die in einen im asynchronen Zeitmultiplex betriebenen Eingangskanal (mtr) eintretenden Zellen, die einen Vorspann mit einer Zielinformation enthalten, welche wie eine Identität des virtuellen Kreises behandelt werden kann, von einem Zähler (FFB) gezählt werden, der jedem virtuellen Kreis zugewiesen ist, und der bei jeder eintretenden Zelle des virtuellen Kreises inkrementiert wird und periodisch dekrementiert wird, solange er sich nicht in einer Ruheposition befindet, dadurch gekennzeichnet, daß die Vorrichtung Taktgebermittel (HG, CV, CTC) aufweist, die nacheinander numerierte Zellentakte (mtc) definieren, welche aufeinanderfolgenden Zeitintervallen entsprechen, während denen auf dem im asynchronen Zeitmultiplex betriebenen Eingangsübertragungskanal eintretende Zellen empfangen werden, wobei Warteschlangeneinrichtungen (FAVE, FCVN) eine Zellentakt-Warteschlange (FAF, FAL, FAV) definieren, die jedem der Zellentakte eigen ist, wobei ein virtueller Kreis einem Zellentakt durch Einschreiben seiner Identität in die entsprechende Zellentakt-Warteschlange zugewiesen werden kann, wobei Steuermittel (MC) den Inhalt der Zellentakt-Warteschlangen (FAF, FAL, FAV) benutzen, und bei jedem Zellentakt einen zu behandelnden virtuellen Kreis identifizieren und den zu diesem virtuellen Kreis gehörenden Zähler (FFB) dekrementieren können, wobei die Steuermittel weiter Einrichtungen solcher Art aufweisen, daß jeder virtuelle Kreis, dessen Zähler (FFB) sich nicht in der Ruheposition befindet, einem der Zellentakte zugewiesen (FAVE) wird, damit der Zähler (FFB) aufgrund des Auftretens dieses Zellentakts dekrementiert wird.

2. Einrichtung zur Auswertung des Durchsatzes virtueller Kreise gemäß Anspruch 1, dadurch gekennzeichnet, daß die Steuermittel (MC) so beschaffen sind, daß bei jedem Zellentakt der diesem Zellentakt zugehörige Inhalt der Zellentakt-Warteschlange in eine Verarbeitungswarteschlange (FAVR, FCVN) übertragen wird, wobei die Identität jedes virtuellen Kreises (FVF, FVL, FFN) der Verarbeitungswarteschlange ihrerseits dazu benutzt wird, den Zähler (FFB) des virtuellen Kreises zu dekrementieren, den sie bezeichnet.

3. Vorrichtung zur Auswertung zur Auswertung des Durchsatzes von virtuellen Kreisen gemäß Anspruch 2, dadurch gekennzeichnet, daß die Steuermittel (MC) so beschaffen sind, daß nach dem Dekrementieren des Zählers (FFB) eines virtuellen Kreises, sofern der Zähler nicht in die Ruheposition gelangt ist, die Identität dieses virtuellen Kreises in eine Zellentakt-Warteschlange (FAVE, FCVN) eingeschrieben wird, die unter Berücksichtigung einer Geschwindigkeitsanzeige (FCVV, indv1) gewählt wird, die mit dem betreffenden virtuellen Kreis verbunden ist.

4. Vorrichtung zur Auswertung des Durchsatzes von virtuellen Kreisen gemäß Anspruch 3, dadurch gekennzeichnet, daß die Steuermittel (MC) so beschaffen sind, daß nach dem Dekrementieren des Zählers (FFB) eines virtuellen Kreises, sofern der Zähler nicht in die Ruheposition gelangt ist, die Identität dieses virtuellen Kreises in eine Zellentakt-Warteschlange (FAVE, FCVN) eingeschrieben wird, die unter Berücksichtigung einer Geschwindigkeitsanzeige (FCVV, indv1), die mit dem betreffenden virtuellen Kreis verbunden ist, sowie einer Angabe (FCVR, FFB) gewählt wird, die von den beobachteten Durchsatz dieses virtuellen Kreises abhängt.

5. Vorrichtung zur Auswertung des Durchsatzes von virtuellen Kreisen gemäß Anspruch 3 oder 4, dadurch gekennzeichnet, daß die Steuermittel (MC) so beschaffen sind, daß beim Empfang einer eintretenden Zelle, sofern sich der Zähler des virtuellen Kreises in seiner Ruheposition befindet, die Identität dieses virtuellen Kreises und, sofern der Zähler nicht in die Ruheposition gelangt ist, die Identität dieses virtuellen Kreises in eine Zellentakt-Warteschlange (FAVE, FCVN) eingeschrieben wird, die unter Berücksichtigung einer Geschwindigkeitsanzeige (FCVV, indv1) gewählt wird, die mit dem betreffenden virtuellen Kreis verbunden ist.

6. Vorrichtung zur Auswertung des Durchsatzes von virtuellen Kreisen gemäß Anspruch 3 oder 4, dadurch gekennzeichnet, daß die Steuermittel (MC) so beschaffen sind, daß beim Empfang einer eintretenden Zelle, sofern sich der Zähler des virtuellen Kreises in seiner Ruheposition befindet, die Identität dieses virtuellen Kreises und, sofern der Zähler nicht in die Ruheposition gelangt ist, die Identität dieses virtuellen Kreises in eine Zellentakt-Warteschlange (FAVE, FCVN) eingeschrieben wird, die unter Berücksichtigung einer Geschwindigkeitsanzeige (FCVV, indv1), die mit dem betreffenden virtuellen Kreis verbunden ist, sowie einer Angabe (FCVR, FFB) gewählt wird, die von den beobachteten Durchsatz dieses virtuellen Kreises abhängt.

7. Vorrichtung zur Auswertung des Durchsatzes von virtuellen Kreisen gemäß Anspruch 4, 5 oder 6, dadurch gekennzeichnet, daß die vom Durchsatz abhängige Angabe die vom Zähler (FFB) des betreffenden virtuellen Kreises besetzte Position ist.

8. Vorrichtung zur Auswertung des Durchsatzes von virtuellen Kreisen gemäß Anspruch 7, dadurch gekennzeichnet, daß eine jedem virtuellen Kreis eigene Zählstandsanzeige (CPT1, CPT2) vorgesehen ist und daß die Steuermittel (MC) so beschaffen sind, daß diese Zählstandsanzeige beim Dekrementieren des Zählers (FFB) eines virtuellen Kreises inkrementiert wird, wenn der Zähler in einem bestimmten Positionsbereich steht, aber dekrementiert wird, wenn der Zähler in einer Position steht, die unter dem genannten Positionsbereich liegt.

9. Vorrichtung zur Auswertung des Durchsatzes von virtuellen Kreisen gemäß Anspruch 8, dadurch gekennzeichnet, daß die Zählstandsanzeige (CPT1, CPT2) einen maximalen Wert besitzt, der erreicht wird, wenn der Bereich mehrheitlich erreicht wird, wobei die Steuermittel weiter Vorrichtungen aufweisen, die dann eine Geschwindigkeitsanzeige (indv1) herbeiführen, welche einer Verminderung der Dekrementierungsgeschwindigkeit des Zählers entspricht.

10. Vorrichtung zur Auswertung des Durchsatzes von virtuellen Kreisen gemäß einem beliebigen Anspruch 3 bis 9, dadurch gekennzeichnet, daß die Steuereinrichtung (MC) so beschaffen sind, daß bei der Dekrementierung eines Zählers (FFB) eines virtuellen Kreises, sofern dieser Zähler nicht in seine Ruheposition gelangt ist, die Identität des virtuellen Kreises, zu dem der Zähler gehört hat, in eine Zellentakt-Warteschlange (FAVE, FCVN) eingeschrieben wird, die auf der Basis des aktuellen Zellentakts (ntc) gewählt wird.

11. Vorrichtung zur Auswertung des Durchsatzes von virtuellen Kreisen gemäß einem beliebigen Anspruch 3 bis 9, dadurch gekennzeichnet, daß die Steuermittel (MC) so beschaffen sind, daß bei der Dekrementierung eines Zählers (FFB) eines virtuellen Kreises, sofern dieser Zähler nicht in seine Ruheposition gelangt ist, die Identität des virtuellen Kreises, zu dem der Zähler gehört hat, in eine Zellentakt-Warteschlange (FAVE, FCVN) eingeschrieben wird, die auf der Basis des Zellentakts, dem der virtuelle Kreis, um den es sich handelt, zuvor zugewiesen worden war und dessen Identität hierzu registriert worden war.

12. Vorrichtung zur Auswertung des Durchsatzes von virtuellen Kreisen gemäß Anspruch 9, dadurch gekennzeichnet, daß Mittel vorgesehen sind, um festzustellen, daß der Zähler eines virtuellen Kreises eine extreme Position erreicht hat, um ihn daran zu hindern, diese zu überschreiten, und um die Übermittlung eines Signals zu veranlassen, das anzeigt, daß der Durchsatz des virtuellen Kreises zu hoch ist.

## Claims

1. Device for evaluating the throughput of virtual circuits carried by an asynchronous time-division multiplex transmission channel in which the incoming cells of an input asynchronous time-division multiplex channel (mtr) including a header containing a destination indicator that can be treated as a virtual circuit identifier are counted by a counter (FFB) assigned to each virtual circuit which is incremented for each incoming cell of the virtual circuit and which is periodically decremented if it is not in a rest condition, characterised in that it comprises clock means (HG, CV, CTC) defining consecutively numbered cell times (ntc) corresponding to successive time intervals during which incoming cells are received on the input asynchronous time-division multiplex transmission channel, queue means (FAVE, FCVN) defining a cell time queue (FAF, FAL, FAV) specific to each of said cell times, a virtual circuit being assignable to a cell time by writing its identifier into the corresponding cell time queue, control means (MC) using the content of said cell time queues (FAF, FAL, FAV) and, for each cell time, being able to identify a virtual circuit to be processed and to decrement the counter (FFB) belonging to this virtual circuit, these control means further comprising arrangements whereby any virtual circuit whose counter (FFB) is not idle is assigned (FAVE) to one of the cell times in order for the counter (FFB) to be decremented by virtue of the arrival of this cell time.

2. Virtual circuit throughput evaluation device according to claim 1 characterised in that said control means (MC) are such that in each cell time the content of the cell time queue associated with the cell time is transferred into a processing queue (FAVR, FCVN), each virtual circuit identifier (FVF, FVL, FFN) of the processing queue being used in turn to decrement the counter (FFB) of the virtual circuit that it designates.

3. Virtual circuit throughput evaluation device according to claim 2 characterised in that said control means (MC) are such that after the counter (FFB) of a virtual circuit is decremented and if the counter has not reached its idle state the identifier of this virtual circuit is written into a cell time queue (FAVE, FCVN) which is selected allowing for a speed indicator (FCVV, indv1) attached to the virtual circuit in question.

4. Virtual circuit throughput evaluation device according to claim 3 characterised in that said control means (MC) are such that after the counter (FFB) of a virtual circuit is decremented and if the counter has not reached its idle state the identifier of this virtual circuit is written into a cell time queue (FAVE, FCVN) which is selected allowing for a speed indicator (FCVV, indv1) attached to the virtual circuit in question and data (FCVR, FFB) dependent on the observed throughput of this virtual circuit.

5. Virtual circuit throughput evaluation device according to claim 3 or claim 4 characterised in that said control means (MC) are such that when an incoming cell is received and if the counter of the virtual circuit is idle the identifier of this virtual circuit is written into a cell time queue (FAVE, FCVN) which is selected allowing for a speed indicator (FCVV, indv1) attached to the virtual circuit in question.

6. Virtual circuit throughput evaluation device according to claim 3 or claim 4 characterised in that said control means (MC) are such that when an incoming cell is received and if the counter of the virtual circuit is idle the identifier of this cell time is written into a cell time queue (FAVE, FCVN) which is selected allowing for a speed indicator (FCVV, indv1) attached to the virtual circuit in question and data (FCVR, FFB) dependent on the observed throughput of this virtual circuit.

7. Virtual circuit throughput evaluation device according to claim 4 or claim 5 or claim 6 characterised in that said data dependent on the throughput is the position occupied by the counter (FFB) of the virtual circuit in question.

8. Virtual circuit throughput evaluation device according to claim 7 characterised in that a count indicator (CPT1, CPT2) is provided for each virtual circuit and in that said control means (MC) are such that this count indicator is incremented when said counter (FFB) of a virtual circuit is decremented if said counter state is in a predetermined range of states and decremented if said counter state is below this range of states.

9. Virtual circuit throughput evaluation device according to claim 8 characterised in that said count indicator (CPT1, CPT2) has a maximal value reached if said range of states is reached on a majority basis, said control means further comprising means which then cause the use of a speed indicator (indv1) corresponding to a reduction in the speed at which said counter is decremented.

10. Virtual circuit throughput evaluation device according to any one of claims 3 to 9 characterised in that said control means (MC) are such that when a virtual circuit counter (FFB) is decremented and if this counter has not then returned to its rest state the identifier of the virtual circuit to which it belongs is written into a cell time queue (FAVE, FCVN) which is selected on the basis of the current cell time (ntc).

11. Virtual circuit throughput evaluation device according to any one of claims 3 to 9 characterised in that said control means (MC) are such that when a virtual circuit counter (FFB) is decremented and if this counter has not then reached its rest condition the identifier of the virtual circuit to which it belongs is written into a cell time queue (FAVE, FCVN) which is selected on the basis of the cell time to which the virtual circuit in question has previously been assigned, the identifier of which has been stored for this purpose.

12. Virtual circuit throughput evaluation device according to claim 9 characterised in that means are provided for detecting when the counter of a virtual circuit has reached an extreme position to prevent it overshooting the latter and to cause the transmission of a signal indicating that the throughput of the virtual circuit is excessive.
